(19) Europäisches Patentamt / European Patent Office / Office européen des brevets

(11) **EP 3 800 065 A1**

(12) **EUROPEAN PATENT APPLICATION**

(43) Date of publication:
07.04.2021 Bulletin 2021/14

(51) Int Cl.:
**B44C 1/10** *(2006.01)*  **B41M 5/00** *(2006.01)*
**D06P 5/00** *(2006.01)*  **B44C 5/04** *(2006.01)*
**B44F 1/08** *(2006.01)*

(21) Application number: 20198293.1

(22) Date of filing: **25.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 26.09.2019 JP 2019174927
21.08.2020 JP 2020140057

(71) Applicant: **JAPAN VILENE COMPANY, LTD.**
**Tokyo 104-8423 (JP)**

(72) Inventor: **Onishi, Hiroshi**
**Moriyama-shi, Shiga 524-0041 (JP)**

(74) Representative: **Cohausz & Florack**
**Patent- & Rechtsanwälte**
**Partnerschaftsgesellschaft mbB**
**Bleichstraße 14**
**40211 Düsseldorf (DE)**

(54) **DECORATIVE FIBER SHEET**

(57) The invention concerns a decorative fiber sheet having a print on one main surface of a fiber sheet, which has small variation in color of the decorative fiber sheet and is excellent in appearance quality due to small variation in printing amount in the decorative fiber sheet. When it contains cellulose nanofibers in a print, it is possible to provide a decorative fiber sheet which has small variation in color of the print contained in the decorative fiber sheet and is excellent in appearance quality.

[Fig.1]

**Description**

[Technical Field]

The present invention relates to a decorative fiber sheet.

[BACKGROUND OF THE INVENTION]

Conventionally, as the skin material of the vehicle interior material such as a ceiling material, for example, as a vehicle decorative fiber sheet disclosed in JP-A-2012-179985 (Patent Document 1), decorative fiber sheet having prints on the surface of the fiber sheet is used.

[Prior art documents]

[Patent Document]

[Patent Document 1] JP-A-2012-179985

[SUMMARY OF THE INVENTION]

[Problem to be solved by the invention]

However, when the applicant of the present application manufactured a decorative fiber sheet comprising prints on a surface of a fiber sheet, the appearance quality of the decorative fiber sheet may be inferior.

To investigate the cause of the inferior appearance quality of the decorative fiber sheet, the applicant of the present application observed the surface of the decorative fiber sheet. As a result, it has been found that there are places where the line of the bleed print becomes thick in the prints on the surface of the decorative fiber sheet, or there are places where the prints on the surface of the decorative fiber sheet lacks, which causes the appearance quality of the decorative fiber sheet to be inferior.

The present invention has been made under such circumstances, and it is an object of the present invention to provide a decorative fiber sheet excellent in appearance quality.

[Means for Solving the Problems]

The invention according to claim 1 of the present invention is "A decorative fiber sheet having prints on one main surface of a fiber sheet, wherein a color difference $\Delta E$ of 50 or more measurement samples is calculated by the following [Color Difference Measurement Method], and the ratio of the number of measurement samples in which the color difference $\Delta E$ is less than 0.2 to the total number of measurement samples is 50% or more.

[Color difference variation measurement method]

(1) Cut 50 or more pieces of the measurement sample into a strip of 5cm×15cm for the decorative fiber sheet.
(2) Using a spectrophotometer, measure the lightness $L^*$ and the chromaticity $a^*$, $b^*$(CIE1976L*a*b* color space) of the main surface having prints of the measurement sample of (1) at three points per measurement sample so as not to overlap with each other in the measurement range having the reflectance measurement diameter of 2.5 centimeters.
(3) Obtain the individual mean $L^*_1$ of the lightness of the three points on one sample measured in (2) and the individual mean $a^*_1$, $b^*_1$ of the chromaticity for each sample measured in (1).
(4) The individual mean $L^*_1$ of the lightness of all the measured samples obtained in (3) and the mean of the individual mean $a^*_1$, $b^*_1$ of the chromaticity are taken, and the total mean $L^*_2$ of the lightness of the entire measured sample and the total mean $a^*_2$, $b^*_2$ of the chromaticity are obtained.
(5) According to the following equation, calculate the color difference $\Delta E$ of the measured sample in (1) for each measured sample sheet in (1) with respect to the total mean $L^*_2$ of the lightness obtained in (4) and the total mean $a^*_2$, $b^*_2$ of the chromaticity.

$$\Delta E = \sqrt{\left(L^*_2 - L^*_1\right)^2 + \left(a^*_2 - a^*_1\right)^2 + \left(b^*_2 - b^*_1\right)^2}".$$

The invention according to claim 2 of the present invention is "The decorative fiber sheet according to claim 1, wherein the color difference $\Delta E$ of the measurement sample is calculated by the above-described [Color difference variation measurement method], and a ratio of the number of measurement samples in which the color difference $\Delta E$ is less than 0.5 to the number of sheets of the entire measurement sample is 90% or more. ".

The invention according to claim 3 of the present invention is "The decorative fiber sheet according to claim 1 or 2, wherein one main surface is bonded by a binder resin for fiber adhesion.".

The invention according to claim 4 of the present invention is "The decorative fiber sheet according to any one of claims 1 to 3, wherein prints comprise cellulose nanofibers.". The invention according to claim 5 of the present invention is "The decorative fiber sheet of claim 4, wherein the mass ratio of cellulose nanofibers contained in the prints is from 0.5 to 5% by mass of the print mass.".

The invention according to claim 6 of the present invention is "The decorative fiber sheet according to claim 4 or 5, wherein an average fiber diameter of the cellulose nanofibers is 8nm or less. ".

[Effect of the Invention]

The decorative fiber sheet according to claim 1 of the present invention is a decorative fiber sheet which has a small variation in color of the decorative fiber sheet and is excellent in appearance quality due to a small variation in printing amount in the decorative fiber sheet.

The decorative fiber sheet according to claim 2 of the present invention is the decorative fiber sheet which has the small variation in color of the decorative fiber sheet and is excellent in appearance quality due to the very small in that the color difference is varied in the decorative fiber sheet.

The decorative fiber sheet according to claim 3 of the present invention is the decorative fiber sheet in which the prints in the decorative fiber sheet is clear and the appearance quality is excellent because one main surface of the decorative fiber sheet is bonded by a binder resin for fiber adhesion so that the decorative fiber sheet tends to be smooth.

The decorative fiber sheet according to claim 4 of the present invention contains cellulose nanofibers in the prints, it is possible to provide the decorative fiber sheet which has small variation in color of prints contained in the decorative fiber sheet and is excellent in appearance quality. Although the reason for this is not completely clarified, it is considered that the constituent components of the printing liquid are easily uniformly dispersed due to the fineness of the fiber diameter of the cellulose nanofiber, and as a result, the variation in the printing amount in the decorative fiber sheet becomes small.

The decorative fiber sheet according to claim 5 of the present invention is a decorative fiber sheet in which the mass ratio of cellulose nanofibers included in the prints is 0.5 to 5% by mass of the print mass, whereby the color variation of the prints included in the decorative fiber sheet is small and the appearance quality is excellent. Although the reason for this is not completely clarified, since the mass ratio of the cellulose nanofibers included in the prints is 0.5mass% or more, the components of the printing liquid are easily uniformly dispersed, and moreover, since the mass ratio of the cellulose nanofibers included in the prints is 5mass% or less, the cellulose nanofibers are difficult to agglomerate, and also, since the cellulose nanofibers are included in the printing liquid, it is easy to exhibit uniform behavior against stresses during printing. As a result, it is considered that the variation in the application amount of the printing liquid in the decorative fiber sheet is small, and the variation in the printing amount in the decorative fiber sheet is small.

The decorative fiber sheet according to claim 6 of the present invention, since the average fiber diameter of the cellulose nanofibers contained in the prints is 8nm or less, there is small variation in the color of the prints contained in the decorative fiber sheet, and a decorative fiber sheet excellent in appearance quality can be provided. Although the reason for this is not completely clarified, it is considered that the constituent components of the printing liquid are easily uniformly dispersed due to the fineness of the fiber diameter of the cellulose nanofiber, and as a result, the variation in the printing amount in the decorative fiber sheet becomes small.

[Brief description of the drawings]

[Fig. 1] In Example 1 and Comparative Example 1, the plan view which shows the arrangement aspect of the prints $P_A$ on one main surface of the decorative fiber sheet.

[Fig. 2] In Examples 2 to 7 and Comparative Examples 2 to 3, the plan view which shows the arrangement aspect of the only print $P_B$ on one main surface of the decorative fiber sheet.

[Fig. 3] In Examples 2 to 7 and Comparative Examples 2 to 3, the plan view which shows the arrangement aspect of the prints $P_A$ and $P_B$ on one main surface of the decorative fiber sheet.

[Forms for implementing the invention]

In the present invention, various configurations such as, for example, the following configurations can be appropriately selected.

The decorative fiber sheet of the present invention has prints on one main surface of the fiber sheet, calculates a color difference $\Delta E$ of 50 or more measurement samples by a color difference variation measurement method described later in detail, and the ratio of the number of measurement samples in which the color difference $\Delta E$ is less than 0.2 to the total number of measurement samples is 50% or more. The "main surface" in the present invention means a surface having the largest area.

The fiber sheet capable of configuration the decorative fiber sheet of the present invention includes, for example, a nonwoven fabric, a woven fabric, and a knitted fabric, but when the fiber sheet is made of a nonwoven fabric, it is preferable to provide a decorative fiber sheet which is flexible and excellent in soft feeling and appearance quality.

The resin constituting the constituent fibers of the fiber sheet includes, for example, a polyolefin-based resin (e.g., polyethylene, polypropylene, polymethylpentene, a polyolefin-based resin having a structure in which a part of a hydrocarbon is substituted with a halogen such as a cyano group or fluorine or chlorine, or the like), a styrene-based resin, a polyvinyl alcohol-based resin, a polyether-based resin (e.g., polyether ether ketone, polyacetal, modified polyphenylene ether, aromatic polyether ketone, or the like), and a polyester-based resin (e.g., polyethylene terephthalate, polytrimethylene terephthalate, polybutylene terephthalate, polyethylene naphthalate, polycarbonate, polyarylate, wholly aromatic polyester resins, polyimide resins, polyamide-based resins, aromatic polyamide resins, aromatic polyetheramide resins, nylon resins, etc.), resins having nitrile groups (e.g., polyacrylonitrile, etc.), urethane-based resins, epoxy-based resins, polysulfone-based resins (e.g., polysulfone, polyethersulfone, etc.), fluorine-based resins (e.g., polytetrafluoroethylene, polyvinylidene fluoride, etc.), cellulose-based resins, polybenzimidazole resins, acrylic resins (e.g., polyacrylonitrile-based resins copolymerized with acrylic acid esters or methacrylic acid esters, modacrylic resins copolymerized with acrylonitrile and vinylidene chloride, and the like, it can be constructed using known organic resins.

Note that these organic resins may be made of any of a linear polymer or a branched polymer, and the organic resin may be a block copolymer or a random copolymer, and there is no particular limitation on the presence or absence of the steric structure or crystallinity of the organic resin. Further, it may be a mixture of multi-component organic resins.

When flame retardancy is required for the decorative fiber sheet, it is preferable that the constituent fibers of the fiber sheet contain a flame-retardant organic resin. As such a flame-retardant organic resin, for example, modacrylic resin, vinylidene resin, polyvinyl chloride resin, polyvinylidene fluoride resin, novoloid resin, polychlal resin, a polyester resin obtained by copolymerizing a phosphorus compound, halogen-containing monomer copolymerized acrylic resin, aramid resin, such as a resin kneaded with a flame retardant of halogen-based or phosphorus-based or metal compound-based.

The aforementioned configuration fibers can be obtained by known methods, for example, fusion spinning, dry spinning, wet spinning, direct spinning (melt blowing, spun bonding, electrostatic spinning, etc.), extraction of fibers with thin fiber diameters by removing one or more resin components from the composite fibers, decomposition of the fibers to obtain split fibers, etc.

The constituent fibers may be made of one type of organic resin or may be made of a plurality of kinds of organic resins. The fibers composed of a plurality of types of organic resins may be generally referred to as composite fibers, for example, in the form of a sheath-core type, an island-sea type, a side-by-side type, an orange type, a bimetallic type, or the like. Besides, the constituent fibers may contain a deformed cross-section fiber other than a fiber having a substantially circular cross-section or an oval fiber. Incidentally, as the deformed cross-sectional fiber, hollow shape, polygonal shapes such as a triangular shapes, alphabet character-type shape such as a Y-shape, irregular shape, multi-leaf shape, symbol-type shapes such as an asterisk shapes, or these shapes may be fibers having a fiber cross-section such as a shape in which a plurality of bonded. When the constituent fibers include heat-fusible fibers, the strength and morphological stability of the decorative fiber sheet by thermally fusing the fibers is excellent, further, less fluffing and scattering of fibers, it is preferable because it is a decorative fiber sheet excellent in appearance quality. Such a heat-fusible fiber may be a heat-fusible fiber of all-fusion type or maybe a heat-fusible fiber of a partially fusible type such as a composite fiber described above. The type of the component of the heat-fusible fiber which exhibits heat fusibility of the material is appropriately selected, for example, a low melting point polyolefin-based resin or a low melting point polyester-based resin can be used.

When the fiber sheet contains crimpable fibers, it is preferable that the fiber sheet becomes a decorative fiber sheet having increased stretchability, excellent followability to mold, and excellent appearance quality. As such a crimpable fiber, for example, a crimpable fiber in which a crimp of a latent crimpable fiber is expressed can be used. Although there is no particular limitation on the fineness of the constituent fibers of the fiber sheet, it is possible to 0.01dtex or more so that the pill is hardly generated and is a decorative fiber sheet excellent in appearance quality. It can be greater than or equal to 1dtex and greater than or equal to 2dtex. On the other hand, it can be less than or equal to 3dtex to be a decorative fiber sheet excellent in appearance quality by being of a homogeneous conformation. The "fineness" refers to values measured by the A method specified in JIS L 1015 (2010), 8.5.1.

Further, although the average fiber length of the constituent fibers of the fiber sheet is not particularly limited, it can be 20mm or more, can be 30mm or more, and can be 35mm or more to a decorative fiber sheet excellent in appearance quality due to a homogeneous conformation. On the other hand, when the average fiber length exceeds 110mm, there is a tendency that a fiber lump is formed at the time of preparation of the fiber sheet and the formation is not homogeneous, and there is a fear that a decorative fiber sheet excellent in appearance quality cannot be provided, so that it can be 110mm or less. The "average fiber length" refers to values measured by the C method specified in JIS L 1015 (2010), 8.4.1.

Although the decorative fiber sheet of the present invention can be composed of, for example, fibers as described above, it is preferable that one main surface of the decorative fiber sheet is bonded by the binder resin for fiber adhesion because the decorative fiber sheet tends to be smooth, so that prints in the decorative fiber sheet becomes clear and is excellent in appearance quality.

The type of the binder resin for fiber adhesion usable in the decorative fiber sheet is appropriately selected, for example, polyolefin (modified polyolefin or the like), ethylene-acrylate copolymer such as ethylene-ethyl acrylate copolymer, various rubbers and derivatives thereof [styrene-butadiene rubber (SBR), fluororubber, ethylenepropylene-diene rubber (EPDM) or the like], cellulose derivative [carboxy methylcellulose (CMC), hydroxyethylcellulose, hydroxypropylcellulose or the like], polyvinyl alcohol (PVA), polyvinyl butyral (PVB),Polyvinylpyrrolidone (PVP), polyurethane, epoxy resin, polyvinylidene fluoride (PVdF), vinylidene fluoride-hexafluoropropylene copolymer (PVdF-HFP), acrylic resin, and the like can be used. In particular, when the acrylic resin is contained in the binder resin for fiber bonding, it is softened appropriately at the time of heat molding such as heat pressing using a mold, so that a molded body excellent in follow-up property to the mold and excellent in appearance quality can be formed, which is preferable.

The amount of the binder resin for fiber bonding included in the decorative fiber sheet is appropriately selected, but as the amount of the binder resin for fiber adhesion increases, the main surface of the decorative fiber sheet tends to be smoother. Since it becomes a decorative fiber sheet is clear and the appearance quality is excellent, the amount of the binder resin for fiber adhesion contained in the fiber sheet is preferably $2g/m^2$ or more. On the other hand, when the amount of the binder resin for fiber bonding is excessively large, the flexibility of the decorative fiber sheet is inferior, which may lead to inferior compliance with the mold when the decorative fiber sheet is molded and processed, and therefore the amount of the binder resin for fiber adhesion is as follows, it is preferably $20 g/m^2$ or less, preferably $10g/m^2$ or less.

Further, the binder resin for bonding fibers may have only one main surface of the decorative fiber sheet, or may have both main surfaces. Since the main surface of the decorative fiber sheet having a binder resin for fiber adhesion tends to be smooth, it is preferable that the binder resin for fiber adhesion is present on at least a main surface having printed.

Further, in addition to the resin described above, the binder resin for fiber adhesion may contain additives such as, for example, a flame retardant, a perfume, a pigment (an inorganic pigment and/or an organic pigment), an antibacterial agent, an antifungal agent, a photocatalyst particulate, an emulsifier, a dispersant, a thickener, a defoaming agent, and a material derived from cellulose.

Various configurations of the fiber sheet such as, for example, a thickness and a weight are not particularly limited and appropriately selected, but for example, the thickness of the fiber sheet may be 0.5 to 4.0mm, and can be 0.7 to 3.0mm and can be 1.0 to 2.0mm. The weight of the fiber sheet may be 80 to $400g/m^2$ and can be 100 to $300g/m^2$ and can be 120 to $250g/m^2$ because the weight may be broken at the time of molding if the weight is too low, whereas the weight may be too high because the formability is poor.

In the present disclosure, the thickness refers to the length in the vertical direction of the measurement object when a compressive load of $20g/cm^2$ is applied in a direction perpendicular to the main surface of the measurement object, and the weight refers to the weight per $1m^2$ of the main surface of the measurement object.

The decorative fiber sheet of the present invention has prints on one main surface of a decorative fiber sheet. The resin contained in prints can be employed as the resin described above as being usable as a binder resin for fiber adhesion.

Further, it is preferable that prints includes a material derived from cellulose in addition to the resin described above, because it is possible to provide the decorative fiber sheet which has the small variation in color of the prints contained in the decorative fiber sheet and is excellent in appearance quality. The reason for this is not completely clarified, but it is considered that the components between prints tend to be uniform by the material derived from cellulose. Note that the term "material derived from cellulose" as used herein refers to a material containing cellulose or a derivative thereof as a main component. Among these, material derived from cellulose are more preferably cellulose nanofibers because of their small fiber diameter and excellent dispersibility, and TEMPO-oxidized cellulose nanofibers are more preferred among cellulose nanofibers because of their uniform fiber diameter and more excellent dispersibility.

When the material derived from cellulose is a cellulose nanofiber, the smaller the average fiber diameter, the better the dispersibility and the better the compatibility with other materials, so that the average fiber, diameter is less than or equal to 100nm, preferably less than or equal to 10nm, more preferably less than or equal to 8nm, and more preferably less than or equal to 5nm. The lower limit of the average fiber diameter is 1nm or more. The average fiber length of the cellulose nanofibers is not particularly limited, but is preferably 50nm or more, more preferably 100nm or more, more preferably 200nm or more. If the average fiber length is too long, the cellulose nanofibers become entangled with each other, and the cellulose nanofibers may not be sufficiently dispersed in the prints, so that a 300nm is realistic as an upper limit. Note that the "average fiber diameter" and the "average fiber length" can be calculated by observing cellulose nanofibers by an electron microscope, randomly selecting 50 cellulose nanofibers from the obtained images, and performing an addition average.

The mass ratio of cellulose nanofibers contained in the prints is preferably from 0.5 to 5% by mass of the print mass. The reason that it is possible to provide the decorative fiber sheet having a small variation in color of prints included in the decorative fiber sheet, excellent in appearance quality, and excellent abrasion resistance. The reason why the appearance quality is excellent is not completely clarified, but it is considered that since the mass ratio of the cellulose nanofibers included in the prints is 0.5mass% or more of the print mass, the constituent components of the printing liquid are easily uniformly dispersed, and the mass ratio of the cellulose nanofibers included in the prints is 5mass% or less of the print mass, the cellulose nanofibers are hardly agglomerated, and as a result, the variation in the application amount of the printing liquid in the decorative fiber sheet is small, and the variation in the printing amount in the decorative fiber sheet is small. Although the reason for the excellent abrasion resistance is not completely clarified, it is considered that the constituent components of the prints are easily uniformly dispersed by the cellulose nanofibers, and moreover, the constituent components of the prints can be retained by the cellulose nanofibers. More preferably, the weight ratio of the cellulosic nanofibers included in the prints is from 0.7 to 3.0% by mass, more preferably, it is from 1.0 to 2.0% by mass.

Further, in addition to the above-described resin and the above-mentioned material derived from cellulose, the prints may contain an additive described above as being contained in the binder resin for fiber adhesion.

The mode of printing in the main surface of the decorative fiber sheet can be selected as appropriate, it is present to cover the entire surface of the main surface, or may be a mode in which a portion of the main surface is covered and present by a handle such as a linear or dot shape or an indefinite shape.

Prints may be of one type or a plurality of types. Besides, the type of the above-described additive contained in the prints may be different from one print to another.

Note that, as long as prints are present on at least one main surface of the decorative fiber sheet, prints may be present on the other main surface of the decorative fiber sheet.

Further, although the prints may be a mode in which the prints does not penetrate the inside of the fiber sheet constituting the decorative fiber sheet and is present only on the surface of the decorative fiber sheet, it is preferable that the prints penetrate the inside of the fiber sheet constituting the decorative fiber sheet because the print pattern remains even if the surface of the decorative fiber sheet is abraded by friction and the design property can be maintained.

The weight of the prints is appropriately selected, designed to be a decorative fiber sheet having excellent design properties, it can be greater than or equal to $1g/m^2$, can be greater than or equal to $1.5g/m^2$, and can be greater than or equal to $2g/m^2$. The weight of the prints can be $20g/m^2$ or less because too much print weight may deteriorate the moldability of the decorative fiber sheet during the molding process. And it can be $15g/m^2$ or less.

In the decorative fiber sheet of the present invention, a color difference $\Delta E$ of 50 or more measurement samples is calculated by the following [Color Difference Variation Measurement Method], and a ratio of the number of measurement samples in which the color difference $\Delta E$ is less than 0.2 to the total number of the measurement sample is 50% or more. The sample to be measured relative to the average of the colors of the sample to be measured by the color difference $\Delta E$, since the color difference of one sheet can be represented by a numerical value, it is possible to confirm the degree of variation in color of the decorative fiber sheet.

[Color difference variation measurement method]

(1) Cut 50 or more pieces of the measurement sample into a strip of 5cm×15cm for the decorative fiber sheet.
(2) Using a spectrophotometer, measure the lightness L* and the chromaticity a*, b*(CIE1976L*a*b* color space) of the main surface having the prints of the measurement sample of (1) at three points per measurement sample so as not to overlap with each other in the measurement range having the reflectance measurement diameter of 2.5 centimeters.
(3) Obtain the individual mean $L*_1$ of the lightness of the three points on one sample measured in (2) and the

individual mean $a^*_1$, $b^*_1$ of the chromaticity for each sample measured in (1).

(4) The individual mean $L^*_1$ of the lightness of all the measured samples obtained in (3) and the mean of the individual mean $a^*_1$, $b^*_1$ of the chromaticity are taken, and the total mean $L^*_2$ of the lightness of the entire measured sample and the total mean $a^*_2$, $b^*_2$ of the chromaticity are obtained.

(5) According to the following equation, calculate the color difference $\Delta E$ of the measured sample in (1) for each measured sample sheet in (1) with respect to the total mean $L^*_2$ of the lightness obtained in (4) and the total mean $a^*_2$, $b^*_2$ of the chromaticity.

$$\Delta E = \sqrt{\left(L^*_2 - L^*_1\right)^2 + \left(a^*_2 - a^*_1\right)^2 + \left(b^*_2 - b^*_1\right)^2}$$

For the number of the entire measurement sample, the larger the ratio of the number of measurement samples color difference $\Delta E$ calculated by the color difference variation measurement method described above is less than 0.2, since a decorative fiber sheet excellent in appearance quality, the number of the entire measurement sample relative to the number, the ratio of the number of measurement samples color difference $\Delta E$ is less than 0.2 is preferably 55% or more, more preferably 60% or more, more preferably 65% or more. Such a decorative fiber sheet can be manufactured, for example, by a manufacturing method described later.

When the ratio of the number of measurement samples in which $\Delta E$ calculated by the above-mentioned color difference variation measurement method is less than 0.1 is 50% or more, it is preferable because the variation in the amount of print coating in the decorative fiber sheet is smaller, so that the variation in the color of the decorative fiber sheet is smaller and the appearance quality is excellent.

When the ratio of the number of measurement samples in which $\Delta E$ calculated by the above-mentioned color difference variation measurement method is less than 0.5 is 90% or more, it is preferable that the color difference is very small in the decorative fiber sheet because the color difference is greatly varied in the decorative fiber sheet, so that the color variation of the prints contained in the decorative fiber sheet is small and the appearance quality is excellent.

Note that the number of measurement samples for calculating the color difference $\Delta E$ may be 50 or more, but the larger the number of measurement samples, the more accurately the variation in the color of the decorative fiber sheet can be evaluated, so that the number of measurement samples is more preferably 75 or more, and still more preferably 100 or more.

The thickness and weight of the decorative fiber sheet are not particularly limited and may be appropriately selected, but for example, the thickness of the decorative fiber sheet may be 0.6 to 4.5mm, can be 0.8 to 3.0mm, and can be 1.3 to 1.8mm. Also, the weight of the decorative fiber sheet can be 83 to 440g/m², can be 120 to 340g/m², and can be 180 to 220g/m².

The decorative fiber sheet of the present invention may be provided with a constituent member such as a further porous body, a film, or a foam on the main surface side different from the main surface on which prints are present.

Next, a method of manufacturing the decorative fiber sheet of the present invention will be exemplified and described.

First, a fiber sheet such as woven fabric, knitted fabric, or nonwoven fabric is prepared using the above-described fibers. Although there is no particular limitation on the method of preparing the fiber sheet, when the fiber sheet is a woven fabric or a knitted fabric, it can be prepared by weaving or knitting the above-described fibers. When the fiber sheet is a nonwoven fabric, for example, a dry method in which the fibers are entangled by subjecting the above-mentioned fibers to a card device, an air lay device, or the like, a wet method in which the fibers are dispersed in a solvent and the papermaking fibers are entangled in a sheet form, a direct spinning method, or the like can be prepared, but a dry method in which the fibers are entangled by being subjected to a card device, an air lay device, or the like is preferably employed because it is a fiber sheet having a certain degree of bulk so as to be excellent in moldability when the decorative fiber sheet is molded and processed.

The fibrous sheet formed as described above is preferably entangled with a water stream or needle for ease of handling. In particular, it is preferable to use needles so as not to impair the thickness and consequently the molding workability of the decorative fiber sheet when the decorative fiber sheet is molded. Preferred needle entanglement conditions are not particularly limited, but are preferably entangled at needle densities of 300 to 1000 per 1cm², more preferably 300 to 600 per 1cm².

If necessary, the fiber sheet may be formed and then thermo-compression bonding. Note that this "thermo-compression bonding" does not mean that the fibers are in a state in which they are melted or plasticized and deformed and bonded, but means that the inter-fiber voids are reduced by heat and pressure, and the fibers are in a state in which the fibers are in close contact with each other at high density. By thermo-compression bonding the fiber sheet, it shrinks slightly microscopically and the surface becomes smooth, so that a sharp print can be formed when printing is performed, and the fiber is hardly scratched by friction, so that it is excellent in abrasion resistance, which is preferable.

Further, if necessary, part or all of the heat-fusible fibers constituting the fiber sheet may be melted by heat treatment to fuse the constituent fibers together. The method of heat treatment at that time is appropriately selected, for example, a method of heating or pressurizing the fiber sheet by a roll, a method of supplying the fiber sheet to a heater such as an oven dryer, a far infrared heater, a dry heat dryer, a hot air dryer, or the like and heating the fiber sheet, a method of irradiating infrared rays under no pressure to heat the organic resin contained in the fiber sheet, or the like can be used.

Further, if necessary, the fiber sheet may be subjected to a pressing process for smoothing the surface of the fiber sheet, such as a pressing process.

Further, it is preferable that the binder resin liquid for bonding fibers is applied by a method such as impregnation, coating, or spraying, and then dried, whereby the constituent fibers of the fiber sheet are bonded by the binder resin for bonding fibers. Finally, a printing liquid is applied to one main surface of the fiber sheet to produce a decorative fiber sheet having prints on one main surface of the fiber sheet. When this printing liquid contains a material derived from cellulose described above, it is preferable to provide a decorative fiber sheet which has small variation in color of prints and is excellent in appearance quality. The method of applying the printing liquid is not particularly limited, but for example, a method of preparing a cylinder having through holes on the entire surface, such as a cylindrical silkscreen, and applying the printing liquid by pushing out the printing liquid from the inside of the cylindrical silkscreen to one main surface of the fiber sheet through holes of the cylinder, and removing the dispersion medium/solvent from the applied printing liquid can be adopted. It is to be noted that, when the printing liquid is impregnated into the inside of the fiber sheet when the printing liquid is applied, the decorative fiber sheet having excellent abrasion resistance is easily obtained, which is preferable. As a method of removing the dispersion medium/solvent, it is appropriately adjusted, but for example, a dispersion medium/solvent can be removed by heating a fiber sheet coated with a printing liquid by a dryer and drying it.

The viscosity of the printing liquid can be appropriately adjusted depending on the printing method, the hole diameter of the cylinder, etc., and it cannot be said generally because the viscosity of the printing liquid is lowered by increasing the stress applied to the liquid. However, if the viscosity of the printing liquid is too high, the pattern chipping due to clogging of the through holes of the cylinder, the pattern chipping due to uneven application of the printing liquid, and the pattern chipping due to the separation of the printing liquid from the fiber sheet tend to occur when the screen is separated. If the viscosity of the printing liquid is too low, the viscosity of the printing liquid tends to leak from the screen. Therefore, it is preferable that the viscosity of the printing liquid is 50-100cp at a shear rate of 3600 cm$^{-1}$ in the E-type viscometer.

When the printing liquid contains cellulose nanofibers, the dispersion of colors contained in the decorative fiber sheet is small by including the cellulose nanofibers in the printing liquid, excellent in appearance quality, and excellent in abrasion resistance can be provided decorative fiber sheets, while the viscosity of the printing liquid becomes too high when the cellulose nanofibers are contained in the printing liquid, and the printing liquid by the aggregation of the cellulose nanofibers contained in the printing liquid is clogged in the through holes of the cylinder, the pattern chipping due to uneven coating of the printing liquid, and the pattern chipping due to the detachment of the printing liquid from the fiber sheet when the screen leaves, so that the concentration of the cellulose nanofibers contained in the printing liquid is 0.01 to 0.45wt% is preferred, 0.05 to 0.40wt% is more preferred, and 0.10 to 0.30wt% is more preferred.

Besides, it may be used for various secondary processes such as processing by punching a shape or the like in accordance with an application or a usage mode.

[EXAMPLES]

(Preparation of heat and pressure needle punched nonwoven fabric)

Using 100% of dope-dyeing-polyester fiber (fineness: 2. 2dtex, fiber length: 38mm, lightness L*:810, chromaticity a*:-2.0, chromaticity b*:-2.0, color: blue-based color), fiber webs were opened by a carding machine to form fiber webs, and then needle punching was performed at a needle density of 400 needles per cm2 from one side to produce needle punched nonwoven fabrics. The needle punched nonwoven fabric was passed between a pair of rolls (slit: 0.6mm) composed of a heated roll (temperature: 170°C) and a non-heated roll so as to be in contact with the roll set, thereby forming a heated and pressed needle punched nonwoven fabric (basis weight: 180 g/m$^2$, thickness: 1.5mm).

(Preparation of binder resin liquid for fiber adhesion)

A binder resin liquid for fiber adhesion of the following formulation was prepared. Acrylic resin-based binder: 6 pts.wt.
Surfactant: 0.2 pts.wt.
Water: 93.8 pts.wt.

(Preparation of binder adhesive nonwoven fabric)

Then, from the surface of the heated and pressurized needle punched nonwoven fabric opposite to the surface subjected to the needle punch process, the binder resin liquid for fiber adhesion described above was applied in a state of being whipped. And binder adhesive nonwoven fabric (weight: 185 g/m$^2$, thickness: 1.5mm) by drying with a candy dryer at 160°C was prepared.

(Preparation of printing liquid A)

Printing liquid A of the following formulation was prepared.
Acrylic resin-based binder: 21 pts.wt.
Acrylic thickener: 1 pts.wt.
Silicone antifoaming agent: 1 pts.wt.
Black pigment: 1 pts.wt.
25% ammonia water: 1 pts.wt.
1% TEMPO oxidized cellulose nanofibers (mean fiber diameter: 4 nm, mean fiber length: 200nm, product name: cellenpia TC-01A (manufactured by Nippon Paper Industries Co., Ltd.) aqueous solution: 10 pts.wt.
Water: 65 pts.wt.
The viscosity of the printing liquid A was 94cp (E-type viscometer, shear rate of 3600 cm$^{-1}$), and the density of the cellulose nanofibers contained in the printing liquid A was 0.1wt%.

(Preparation of printing liquid B)

Printing liquid B of the following formulation was prepared.
Acrylic resin-based binder: 21 pts.wt.
Acrylic thickener: 1 pts.wt.
Silicone antifoaming agent: 1 pts.wt.
Black pigment: 1 pts.wt.
25% ammonia water: 1 pts.wt.
Water: 75 pts.wt.
The viscosity of the printing liquid B was 110cp (E-type viscometer, shear rate of 3600 cm$^{-1}$).

(Preparation of printing liquid C)

Printing liquid C of the following formulation was prepared.
Acrylic resin binder: 14 pts.wt.
Acrylic thickener: 1 pts.wt.
Silicone antifoaming agent: 1 pts.wt.
White pigment: 1 pts.wt.
25% ammonia water: 1 pts.wt.
1% TEMPO oxidized cellulose nanofibers (mean fiber diameter: 4 nm, mean fiber length: 200nm, product name: cellenpia TC-01A (manufactured by Nippon Paper Industries Co., Ltd.) aqueous solution: 10 pts.wt.
Water: 72 pts.wt.
The viscosity of the printing liquid C was 85cp (E-type viscometer, shear rate of 3600 cm$^{-1}$), and the density of the cellulose nanofibers contained in the printing liquid C was 0.1wt%.

(Preparation of printing liquid D)

Printing liquid D of the following formulation was prepared.
Acrylic resin binder: 14 pts.wt.
Acrylic thickener: 1 pts.wt.
Silicone antifoaming agent: 1 pts.wt.
White pigment: 1 pts.wt.
25% ammonia water: 1 pts.wt.
Water: 82 pts.wt.
The viscosity of the printing liquid D was 98cp (E-type viscometer, shear rate of 3600 cm$^{-1}$).

(Preparation of printing liquid E)

Printing liquid E of the following formulation was prepared.
Acrylic resin binder: 21 pts.wt.
Acrylic thickener: 1 pts.wt.
Silicone antifoaming agent: 1 pts.wt.
Black pigment: 1 pts.wt.
25% ammonia water: 1 pts.wt.
1% TEMPO oxidized cellulose nanofibers (mean fiber diameter: 4 nm, mean fiber length: 200nm, product name: cellenpia TC-01A (manufactured by Nippon Paper industries Co., Ltd.) aqueous solution: 20 pts.wt.
Water... 55 pts.wt.
The viscosity of the printing liquid E was 98cp (E-type viscometer, shear rate of 3600 cm$^{-1}$), and the density of the cellulose nanofibers contained in the printing liquid E was 0.2wt%.

(Preparation of printing liquid F)

Printing liquid F of the following formulation was prepared.
Acrylic resin binder: 21 pts.wt.
Acrylic thickener: 1 pts.wt.
Silicone antifoaming agent: 1 pts.wt.
Black pigment: 1 pts.wt.
25% ammonia water: 1 pts.wt.
1% TEMPO oxidized cellulose nanofibers (mean fiber diameter: 4 nm, mean fiber length: 200nm, product name: cellenpia TC-01A (manufactured by Nippon Paper Industries Co., Ltd.) aqueous solution: 30 pts.wt.
Water: 45 pts.wt.
The viscosity of the printing liquid F was 102cp (E-type viscometer, shear rate of 3600 cm$^{-1}$), and the density of the cellulose nanofibers contained in the printing liquid F was 0.3wt%.

(Preparation of printing liquid G)

Printing liquid G of the following formulation was prepared.
Acrylic resin binder: 21 pts.wt.
Acrylic thickener: 1 pts.wt.
Silicone antifoaming agent: 1 pts.wt.
Black pigment: 1 pts.wt.
25% ammonia water: 1 pts.wt.
1% TEMPO oxidized cellulose nanofibers (mean fiber diameter: 4 nm, mean fiber length: 200nm, product name: cellenpia TC-01A (manufactured by Nippon Paper Industries Co., Ltd.) aqueous solution: 5 pts.wt.
Water: 70 pts.wt.
The viscosity of the printing liquid G was 102cp (E-type viscometer, shear rate of 3600 cm$^{-1}$), and the density of the cellulose nanofibers contained in the printing liquid G was 0.05wt%.

(Preparation of printing liquid H)

Printing liquid H of the following formulation was prepared.
Acrylic resin binder: 12.5 pts.wt.
Acrylic thickener: 1 pts.wt.
Silicone antifoaming agent: 1 pts.wt.
Black pigment: 1 pts.wt.
25% ammonia water: 1 pts.wt.
1% TEMPO oxidized cellulose nariofibers (mean fiber diameter: 4 nm, mean fiber length: 200nm, product name: cellenpia TC-01A (manufactured by Nippon Paper Industries Co., Ltd.) aqueous solution: 10 pts.wt.
Water: 73.5 pts.wt.
The viscosity of the printing liquid H was 80cp (E-type viscometer, shear rate of 3600 cm$^{-1}$), and the density of the cellulose nanofibers contained in the printing liquid H was 0.1 wt%.

(Preparation of printing liquid I)

Printing liquid I of the following formulation was prepared.
Acrylic resin binder: 7.3 pts.wt.
Acrylic thickener: 1 pts.wt.
Silicone antifoaming agent: 1 pts.wt.
White pigment: 1 pts.wt.
25% ammonia water: 1 pts.wt.
1% TEMPO oxidized cellulose nanofibers (mean fiber diameter: 4 nm, mean fiber length: 200nm, product name: cellenpia TC-01A (manufactured by Nippon Paper Industries Co., Ltd.) aqueous solution: 10 pts.wt.
Water: 78.7 pts.wt.
The viscosity of the printing liquid I was 95cp (E-type viscometer, shear rate of 3600 cm$^{-1}$), and the density of the cellulose nanofibers contained in the printing liquid I was 0.1 wt%.

(Preparation of printing liquid J)

Printing liquid J of the following formulation was prepared.
Acrylic resin binder: 21 pts.wt.
Acrylic thickener: 1 pts.wt.
Silicone antifoaming agent: 1 pts.wt.
Black pigment: 1 pts.wt.
25% ammonia water: 1 pts.wt.
Carboxymethylated cellulose nanofibers powder (mean fiber diameter: 20nm, continuous fiber in which fibers adopt a network structure, manufactured by Nippon Paper Industries Co., Ltd.): 0.1 pts.wt.
Water: 74.9 pts.wt.
The viscosity of the printing liquid J was 110cp (E-type viscometer, shear rate of 3600 cm$^{-1}$), and the density of the cellulose nanofibers contained in the printing liquid J was 0.1wt%.

Example 1

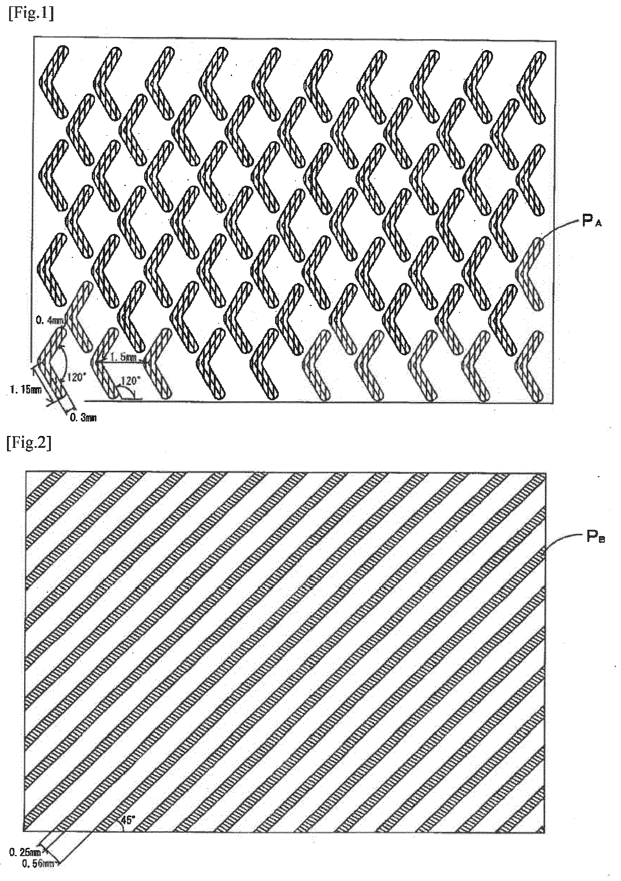

Then, with respect to the surface of the binder adhesive nonwoven fabric described above subjected to the binder resin liquid for fiber adhesion, a plurality of prints were printed in the form of a "< " by a cylinder using the printing liquid A. Thereafter, the sheet is dried by a dryer at 160°C, and as shown in Fig. 1, a decorative fiber sheet having prints $P_A$ in the form of a" < " (weight: 195g/m$^2$, thickness: 1.5mm, mass of the prints $P_A$: 10 g/m$^2$, mass ratio of TEMPO oxidized cellulose nanofibers contained in the print $P_A$: 1.0mass%) was prepared. The main surface of the decorative fiber sheet with the printed sheet was observed a number of 83 " < " shaped prints per 1cm$^2$. Further, when the cross section of the decorative fiber sheet was observed, the printed $P_A$ penetrated to the inside of the binder adhesive nonwoven fabric constituting the decorative fiber sheet.

Example 2

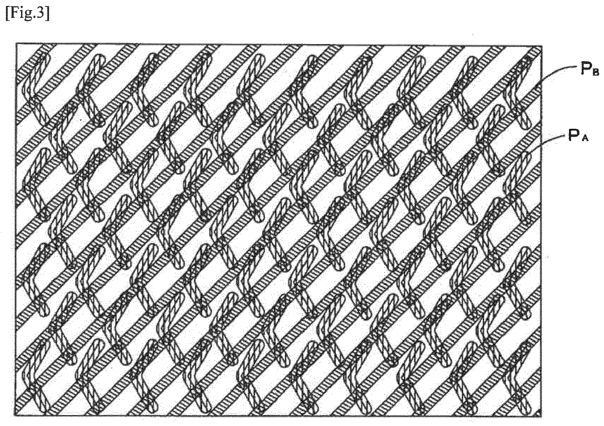

With respect to the surface of the binder adhesive nonwoven fabric described above subject to the binder resin liquid for fiber adhesion, a plurality of prints were printed in the form of a "< " by a cylinder using the printing liquid A. A plurality of straight lines were printed in the cylinder diagonally upward to the right by using the printing liquid C again before the printing liquid A was dry (line width: 0.24mm, line spacing: 0.56mm, angle: 45°) as shown in Fig. 2. Thereafter, the sheet is dried by a dryer at 160°C, and as shown in Fig. 3, a decorative fiber sheet having prints $P_A$ in the form of a " < " and a rectilinear prints $P_B$ directed obliquely upward and rightward (weight: 200g/m$^2$, thickness: 1.5mm, mass of the prints $P_A$: 10g/m$^2$, mass of the prints $P_B$: 5g/m$^2$, mass ratio of TEMPO oxidized cellulose nanofibers contained in the prints $P_A$: 1.0mass%, mass ratio of TEMPO oxidized cellulose nanofibers contained in the prints $P_B$: 2.0mass%) was produced. Further, when the cross section of the decorative fiber sheet was observed, the printed $P_A$ and $P_B$ penetrated to the inside of the binder adhesive nonwoven fabric constituting the decorative fiber sheet.

Example 3

Except that printing liquid D was used instead of printing liquid C in the same manner as in Example 2, decorative fiber sheet (weight: 200g/m$^2$, thickness: 1.5mm, mass of the prints. $P_A$: 10g/m$^2$, mass of the prints $P_B$: 5g/m$^2$, mass ratio of TEMPO oxidized cellulose nanofibers contained in the prints $P_A$: 1.0mass%) was produced. Further, when the cross section of the decorative fiber sheet was observed, the printed $P_A$ and $P_B$ penetrated to the inside of the binder adhesive nonwoven fabric constituting the decorative fiber sheet.

Example 4

Except that printing liquid E was used instead of printing liquid A in the same manner as in Example 3, decorative fiber sheet (weight: 200g/m$^2$, thickness: 1.5mm, mass of the prints $P_A$: 10g/m$^2$, mass of the prints $P_B$: 5g/m$^2$, mass ratio of TEMPO oxidized cellulose nanofibers contained in the prints $P_A$: 2.0mass%) was produced. Further, when the cross section of the decorative fiber sheet was observed, the printed $P_A$ and $P_B$ penetrated to the inside of the binder adhesive nonwoven fabric constituting the decorative fiber sheet.

Example 5

Except that printing liquid F was used instead of printing liquid A in the same manner as in Example 3, decorative fiber sheet (weight: 200 g/m$^2$, thickness: 1.5mm, mass of the prints $P_A$: 10g/m$^2$, mass of the prints $P_B$: 5g/m$^2$, mass ratio of TEMPO oxidized cellulose nanofibers contained in the prints $P_A$: 3.0mass%) was produced. Further, when the cross section of the decorative fiber sheet was observed, the printed $P_A$ and $P_B$ penetrated to the inside of the binder adhesive nonwoven fabric constituting the decorative fiber sheet.

Example 6

Except that printing liquid G was used instead of printing liquid A in the same manner as in Example 3, decorative fiber sheet (weight: 200 g/m$^2$, thickness: 1.5mm, mass of the prints PA: 10g/m$^2$, mass of the prints $P_B$: 5g/m$^2$, mass ratio of TEMPO oxidized cellulose nanofibers contained in the prints PA: 0.5mass%) was produced. Further, when the cross section of the decorative fiber sheet was observed, the printed $P_A$ and $P_B$ penetrated to the inside of the binder adhesive nonwoven fabric constituting the decorative fiber sheet.

Example 7

With respect to the surface of the binder adhesive nonwoven fabric described above subjected to the binder resin liquid for fiber adhesion, a plurality of prints were printed in the form of a " < " by a cylinder using the printing liquid H. And plurality of straight lines were printed in the cylinder diagonally upward to the right by using the printing liquid I again before the printing liquid H was dry (line width: 0.24mm, line spacing: 0.56mm, angle: 45°) as shown in Fig. 2. Thereafter, the sheet is dried by a dryer at 160° C, and as shown in Fig. 3, a decorative fiber sheet having prints $P_A$ in the form of a " < " and a rectilinear print $P_B$ directed obliquely upward and rightward (weight: 200g/m$^2$, thickness: 1.5mm, mass of the prints $P_A$: 6g/m$^2$, mass of the prints $P_B$: 3g/m$^2$, mass ratio of TEMPO oxidized cellulose nanofibers contained in the prints $P_A$: 1.7mass%, mass ratio of TEMPO oxidized cellulose nanofibers contained in the prints $P_B$: 3.3mass%) was produced. Further, when the cross section of the decorative fiber sheet was observed, the printed $P_A$ and $P_B$ penetrated to the inside of the binder adhesive nonwoven fabric constituting the decorative fiber sheet.

Comparative Example 1

Except that printing liquid B was used instead of printing liquid A in the same manner as in Example 1, decorative fiber sheet (weight: 195g/m$^2$, thickness: 1.5mm, mass of the prints $P_A$: 10g/m$^2$) was produced. Further, when the cross section of the decorative fiber sheet was observed, the printed $P_A$ penetrated to the inside of the binder adhesive nonwoven fabric constituting the decorative fiber sheet.

Comparative Example 2

Except that printing liquid B was used instead of printing liquid A in the same manner as in Example 3, decorative fiber sheet (weight: 200g/m$^2$, thickness: 1.5mm, mass of the prints $P_A$: 10g/m$^2$, mass of the prints $P_B$: 5g/m$^2$) was produced. Further, when the cross section of the decorative fiber sheet was observed, the printed $P_A$ and $P_B$ penetrated to the inside of the binder adhesive nonwoven fabric constituting the decorative fiber sheet.

Comparative Example 3

Except that printing liquid J was used instead of printing liquid A in the same manner as in Example 3, decorative fiber sheet (weight: 200g/m$^2$, thickness: 1.5mm, mass of the prints $P_A$: 10g/m$^2$, mass of the prints $P_B$: 5g/m$^2$, mass ratio of carboxymethylated cellulose nanofibers contained in the prints $P_A$: 1.0mass%) was produced. Further, when the cross section of the decorative fiber sheet was observed, the printed $P_A$ and $P_B$ penetrated to the inside of the binder adhesive nonwoven fabric constituting the decorative fiber sheet.

Reference Example 1

The binder adhesive nonwoven fabric described above, which does not have print on one main surface of the fiber sheet (weight: 185g/m$^2$, Thickness: 1.5mm) was prepared.

The color difference $\Delta E$ of the measurement sample of Examples, Comparative Examples and Reference Examples obtained by using the above-mentioned [Color difference variation measurement method].

The measurement sample was obtained by cutting out the decorative fiber sheet of Examples, Comparative Examples and Reference Examples. The decorative fiber sheet which is a strip of 125cm in the longitudinal direction and 60cm in the lateral direction is prepared, and it's cut into 4 sheets 15cm long in the lateral direction, and then each cut decorative fiber sheet is cut into 25 rows 5cm long in the longitudinal direction to obtain 100 pieces of 5cm×15cm rectangular measurement samples. And, it was measured using the integrating sphere photography (X-light Corp., Color i5) as the photometers. The measurement results of $\Delta E$ of 100 measurement samples are summarized for each value of $\Delta E$, Table 1 below shows Examples, Comparative Examples and Reference Examples in Table 2.

[Table 1]

| Color difference $\Delta E$ | Example 1 | Example 2 | Example 3 | Example 4 | Example 5 | Example 6 | Example 7 |
|---|---|---|---|---|---|---|---|
| Less than 0.1 | 67 | 37 | 21 | 44 | 60 | 18 | 31 |
| 0.1 Not less than 0.2 | 20 | 24 | 29 | 25 | 22 | 32 | 21 |
| 0.2 Not less than 0.3 | 7 | 18 | 20 | 16 | 11 | 22 | 17 |
| 0.3 Not less than 0.4 | 5 | 12 | 19 | 14 | 4 | 14 | 10 |
| 0.4 Not less than 0.5 | 1 | 7 | 6 | 0 | 1 | 7 | 11 |
| 0.5 Not less than 1.0 | 0 | 2 | 5 | 1 | 2 | 7 | 10 |
| 1.0 Not less than 1.5 | 0 | 0 | 0 | 0 | 0 | 0 | 0 |
| 1.5 above | 0 | 0 | 0 | 0 | 0 | 0 | 0 |

[Table 2]

| Color difference $\Delta E$ | Comparative Example 1 | Comparative Example 2 | Comparative Example 3 | Reference Example 1 |
|---|---|---|---|---|
| Less than 0.1 | 14 | 0 | 0 | 58 |
| 0.1 Not less than 0.2 | 13 | 20 | 18 | 40 |
| 0.2 Not less than 0.3 | 19 | 23 | 25 | 2 |
| 0.3 Not less than 0.4 | 11 | 18 | 18 | 0 |
| 0.4 Not less than 0.5 | 15 | 15 | 13 | 0 |
| 0.5 Not less than 1.0 | 21 | 18 | 23 | 0 |
| 1.0 Not less than 1.5 | 7 | 5 | 3 | 0 |
| 1.5 above | 0 | 2 | 0 | 0 |

Further, by subjecting to the following "Sensory Inspection", the appearance quality of the decorative fiber sheet of Examples and Comparative Examples was evaluated. The evaluation results are shown in Table 3 below. In addition, abrasion resistance of Examples and Comparative Examples was evaluated by subjecting them to the following "Abrasion resistance measurement". The evaluation results are shown in Table 4 below.

[Sensory Inspection]

For 10 panelists (A-J) on the appearance and quality of the decorative fiber sheets of the Examples and Comparative Examples, such as whether or not the prints have variations in color when viewed from the main surface with the prints.

Grade evaluation methods (1: feel variation in prints (poor), 2: good, 3: don't feel variation in prints (excellent)) was performed to determine the arithmetic mean value of the evaluation.

[Table 3]

| | Panelist | | | | | | | | | | |
| --- | A | B | C | D | E | F | G | H | I | J | Evaluation mean |
| Example 1 | 3 | 3 | 2 | 3 | 3 | 3 | 2 | 2 | 3 | 3 | 2.7 |
| Example 2 | 2 | 3 | 2 | 3 | 2 | 3 | 3 | 3 | 3 | 3 | 2.7 |
| Example 3 | 2 | 3 | 2 | 3 | 2 | 2 | 2 | 2 | 3 | 3 | 2.4 |
| Example 4 | 3 | 3 | 2 | 3 | 3 | 3 | 2 | 2 | 3 | 3 | 2.7 |
| Example 5 | 3 | 3 | 2 | 3 | 3 | 3 | 2 | 3 | 3 | 3 | 2.8 |
| Example 6 | 2 | 3 | 2 | 2 | 2 | 3 | 2 | 2 | 3 | 2 | 2.3 |
| Example 7 | 2 | 2 | 2 | 2 | 2 | 2 | 3 | 2 | 2 | 2 | 2.1 |
| Comparative Example 1 | 2 | 1 | 1 | 2 | 2 | 2 | 1 | 1 | 1 | 3 | 1.6 |
| Comparative Example 2 | 2 | 2 | 2 | 2 | 1 | 1 | 1 | 2 | 1 | 2 | 1.6 |
| Comparative Example 3 | 2 | 2 | 1 | 1 | 1 | 2 | 2 | 1 | 1 | 2 | 1.5 |

[Abrasion resistance measurement]

The main surface provided with prints of decorative fiber sheets of Examples and Comparative Examples is contacted with an abrasion ring by applying a load of 2.45N to the abrasion ring CS-10 by a Taber type rotary applicator. After rotating the wear ring 50 times, 100 times, and 200 times at a speed of 60rpm, the surface state of the main surface was examined and evaluated based on the following evaluation criteria.

5: What has no change in the surface at all compared with the front when the abrasion ring is rotated.
4: Those whose surface can be partially confirmed with fluff.
3: Fluff can be confirmed on the entire surface, but the length of fluff is as short as 1mm or less.
2: Fluff can be seen on the entire surface, the length of the fluff exceeds 1mm, and the surface can be partially tangled with fluff, and the pills can be seen.
1: Fluff can be seen on the entire surface, the length of the fluff exceeds 1mm, and the fluff can be intertwined on the entire surface, and the pills can be seen.

[Table 4]

| | 50 Rotations | 100 Rotations | 200 Rotations |
| --- | --- | --- | --- |
| Example 1 | 3 | 3 | 2 |
| Example 2 | 4 | 4 | 4 |
| Example 3 | 4 | 4 | 4 |
| Example 4 | 5 | 4 | 4 |
| Example 5 | 5 | 5 | 5 |
| Example 6 | 3 | 3 | 3 |

(continued)

|  | 50 Rotations | 100 Rotations | 200 Rotations |
|---|---|---|---|
| Example 7 | 4 | 3 | 3 |
| Comparative Example 1 | 2 | 2 | 1 |
| Comparative Example 2 | 4 | 3 | 3 |
| Comparative Example 3 | 3 | 3 | 2 |

From the results of the color difference variation measurement method of Example 1 and comparative Example 1 and Reference Example 1, it was found that variation in color difference occurs by printing of a decorative fiber sheet rather than a fiber sheet. In addition, from the results of the color difference variation measuring methods of Examples and Comparative Examples, it was found that decorative fiber sheet with small color difference variations can be realized by using prints containing TEMPO oxidized cellulose nanofibers. Further, from the results of the Sensory Inspection, the decorative fiber sheet of the present invention calculates the color difference $\Delta E$ of 100 measurement samples by the color difference variation measurement method, the number of measurement samples of the whole whose color difference is less than 0.2 is 50% or more, it has been found that a decorative fiber sheet excellent in appearance quality can be realized.

In addition, the results of the abrasion resistance measurements of Example 3~5 which have print $P_A$ containing 1.0mass% or more cellulose nanofibers and print $P_B$, and Comparative Example 2 which have print $P_A$ without cellulose nanofibers and print $P_B$, print containing at least 1.0mass% cellulose nanofibers were found to be excellent in abrasion resistance.

[Industrial Applicability]

The decorative fiber sheet of the present invention can be used as a surface material of various interior materials, in particular, a surface material of an interior material for a vehicle such as a ceiling, a door side, a pillar garnish, and a rear package.

[Description of Symbols]

$P_A$ Prints
$P_B$ Prints

**Claims**

1.  A decorative fiber sheet having prints on one main surface of a fiber sheet, wherein a color difference $\Delta E$ of 50 or more measurement samples is calculated by the following [Color Difference Measurement Method], and the ratio of the number of measurement samples in which the color difference $\Delta E$ is less than 0.2 to the total number of measurement samples is 50% or more.
    [Color difference variation measurement method]

    (1) Cut 50 or more pieces of the measurement sample into a strip of 5cm×15cm for the decorative fiber sheet.
    (2) Using a spectrophotometer, measure the lightness L* and the chromaticity a*, b*(CIE1976L*a*b* color space) of the main surface having prints of the measurement sample of (1) at three points per measurement sample so as not to overlap with each other in the measurement range having the reflectance measurement diameter of 2.5 centimeters.
    (3) Obtain the individual mean $L^*_1$ of the lightness of the three points on one sample measured in (2) and the individual mean $a^*_1$, $b^*_1$ of the chromaticity for each sample measured in (1).
    (4) The individual mean $L^*_1$ of the lightness of all the measured samples obtained in (3) and the mean of the individual mean $a^*_1$, $b^*_1$ of the chromaticity are taken, and the total mean $L^*_2$ of the lightness of the entire measured sample and the total mean $a^*_2$, $b^*_2$ of the chromaticity are obtained.
    (5) According to the following equation, calculate the color difference $\Delta E$ of the measured sample in (1) for each measured sample sheet in (1) with respect to the total mean $L^*_2$ of the lightness obtained in (4) and the total

mean a*$_2$, b*$_2$ of the chromaticity.

$$\Delta E = \sqrt{\left(L^*_2 - L^*_1\right)^2 + \left(a^*_2 - a^*_1\right)^2 + \left(b^*_2 - b^*_1\right)^2}$$

2. The decorative fiber sheet according to claim 1, wherein the color difference $\Delta$ E of the measurement sample is calculated by the above-described [Color difference variation measurement method], and a ratio of the number of measurement samples in which the color difference $\Delta$ E is less than 0.5 to the number of sheets of the entire measurement sample is 90% or more.

3. The decorative fiber sheet according to claim 1 or 2, wherein one main surface is bonded by a binder resin for fiber adhesion.

4. The decorative fiber sheet according to any one of claims 1 to 3, wherein prints comprises cellulose nanofibers.

5. The decorative fiber sheet of claim 4, wherein the mass ratio of cellulose nanofibers contained in the prints is from 0.5 to 5% by mass of the print mass.

6. The decorative fiber sheet according to claim 4 or 5, wherein an average fiber diameter of the cellulose nanofibers is 8nm or less.

[Fig.1]

[Fig.2]

17

[Fig.3]

Europäisches
Patentamt

European
Patent Office

Office européen
des brevets

# EUROPEAN SEARCH REPORT

Application Number

EP 20 19 8293

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/051150 A1 (KAWAHARADA YUKIHIKO [JP] ET AL) 23 February 2017 (2017-02-23) * paragraph [0189] - paragraph [0218] * ----- | 1-5 | INV. B44C1/10 B41M5/00 D06P5/00 |
| X | WO 2019/087826 A1 (SEIKO EPSON CORP [JP]) 9 May 2019 (2019-05-09) * paragraph [0122] - paragraph [0131] * ----- | 1-6 | ADD. B44C5/04 B44F1/08 |
| A | JP 2014 051268 A (JAPAN VILENE CO LTD) 20 March 2014 (2014-03-20) * the whole document * ----- | 1-6 | |
| A,D | JP 2012 179985 A (JAPAN VILENE CO LTD) 20 September 2012 (2012-09-20) * the whole document * ----- | 1-6 | |

TECHNICAL FIELDS
SEARCHED     (IPC)

B44C
B41M
D06Q
B44F
D06P
C09D

The present search report has been drawn up for all claims

| Place of search | Date of completion of the search | Examiner |
|---|---|---|
| Munich | 26 February 2021 | Björklund, Sofie |

EPO FORM 1503 03.82 (P04C01)

## ANNEX TO THE EUROPEAN SEARCH REPORT
## ON EUROPEAN PATENT APPLICATION NO.

EP 20 19 8293

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2021

| Patent document cited in search report | | Publication date | Patent family member(s) | | Publication date |
|---|---|---|---|---|---|
| US 2017051150 | A1 | 23-02-2017 | JP | 5908662 B1 | 26-04-2016 |
| | | | JP | 6350569 B2 | 04-07-2018 |
| | | | JP | 2016148044 A | 18-08-2016 |
| | | | JP | WO2015166808 A1 | 20-04-2017 |
| | | | US | 2017051150 A1 | 23-02-2017 |
| | | | WO | 2015166808 A1 | 05-11-2015 |
| WO 2019087826 | A1 | 09-05-2019 | JP | 2019085472 A | 06-06-2019 |
| | | | WO | 2019087826 A1 | 09-05-2019 |
| JP 2014051268 | A | 20-03-2014 | JP | 6392495 B2 | 19-09-2018 |
| | | | JP | 2014051268 A | 20-03-2014 |
| JP 2012179985 | A | 20-09-2012 | JP | 6172883 B2 | 02-08-2017 |
| | | | JP | 2012179985 A | 20-09-2012 |

EPO FORM P0459

For more details about this annex : see Official Journal of the European Patent Office, No. 12/82

**EP 3 800 065 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012179985 A

**Non-patent literature cited in the description**

- *JIS L,* 2010, vol. 1015, 8.5.1